# FASCICULE DE BREVET EUROPEEN

(11) **EP 2 785 623 B1**
(45) Date de publication et mention de la délivrance du brevet: **14.06.2017**
(21) Numéro de dépôt: 11808906.9
(22) Date de dépôt: 28.11.2011
(51) Int. Cl.: B65G 69/18, F16L 37/00, B82Y 40/00

(54) **PROCEDE D'UTILISATION D'UN CONTENEUR**
VERFAHREN ZUR VERWENDUNG EINES BEHÄLTERS
METHOD FOR USING A CONTAINER

(43) Date de publication de la demande: 08.10.2014
(73) Titulaire: Nanomakers, 75009 Paris (FR)
(72) Inventeur: TENEGAL, François, F-75014 Paris (FR); NADEAU, Cyril, F-75011 Paris (FR)
(74) Mandataire: Pontet Allano & Associes
(86) Numéro de dépôt international: PCT/FR2011/052797
(87) Numéro de publication internationale: WO 2013/079809

(56) Documents cités:
- EP-A1- 0 747 307
- EP-A1- 2 085 312
- WO-A1-2011/047872

## Description

### Domaine technique

La présente invention concerne un procédé d'utilisation d'un conteneur.

Le domaine de l'invention est plus particulièrement celui des particules submicroniques. En particulier, mais de manière non limitative, le domaine de l'invention est de préférence celui des poudres nanométriques ou nanopoudres ou encore nanoparticules. Le procédé selon l'invention permet d'assurer plus de sécurité à un utilisateur en limitant au maximum tout contact de cet utilisateur avec les particules contenues dans le conteneur ou isolées par une vanne.

### Etat de la technique antérieure

On connaît des dispositifs à double vannes (par exemple de type « Buck^{®} », tels que décrits par exemple dans les documents US 5 690 152, US 5 718 270 et US 5 540 266) permettant une bonne étanchéité et une bonne sécurité pour le transport d'objets macroscopiques tels que des granulés pharmaceutiques.

On connaît en outre un procédé de remplissage d'un conteneur ou récipient par un tel dispositif à double vannes, tel que décrit par exemple dans le document EP 2 085 312 B1. Ce document décrit le préambule de la revendication 1. Le conteneur contient une des deux vannes du dispositif à double vannes.

Les problèmes posés par un tel procédé de remplissage ou par un tel conteneur selon l'état de la technique sont multiples :
- la sécurité n'est pas optimale, notamment lorsque le conteneur comprend des particules submicroniques voir des nanopoudres, le conteneur n'étant alors plus parfaitement étanche, en particulier quand les différentiels de pression supérieurs à 400 mbars surviennent entre le conteneur et l'environnement extérieur ou le procédé auquel il est connecté.
- l'utilisation d'un tel conteneur n'est pas très commode, et peut demander beaucoup d'étapes de manipulation du conteneur et/ou des particules avant ou pendant le chargement dans le conteneur, ou pendant ou après le déchargement hors du conteneur.

Le but de l'invention est de résoudre au moins un des problèmes techniques suivants :
- améliorer l'étanchéité du conteneur ou plus généralement de la vanne du conteneur, et/ou
- diminuer le nombre d'étapes de manipulation du conteneur et/ou des particules avant ou pendant le chargement dans le conteneur, ou pendant ou après le déchargement hors du conteneur.

### Exposé de l'invention

Il est proposé un procédé d'utilisation d'un conteneur selon la revendication 1.

On peut:
- avant de charger le conteneur avec des particules, vidanger l'espace interne par le raccord, puis rincer l'espace interne au gaz (de préférence neutre) par le raccord, et/ou
- charger le conteneur avec des particules sèches, et le procédé selon l'invention peut comprendre en outre une injection de liquide dans l'espace interne par le raccord avant le déchargement, de préférence jusqu'à une mise en solution des particules dans l'espace interne, et/ou
- injecter du gaz dans l'espace interne par le raccord pendant que l'on décharge le conteneur.

On peut changer l'état physique des objets (typiquement des particules, de préférence submicroniques) dans l'espace interne après le chargement, de préférence par des moyens pour changer in situ dans l'espace interne l'état physique des objets tels qu'énoncés ci-dessus. Ces moyens sont de préférence contenus dans l'espace interne. Ces moyens font de préférence partie du conteneur. On change l'état des objets (typiquement des particules, de préférence submicroniques) de préférence alors que les vannes de chargement et de déchargement sont fermées.

On peut utiliser un conteneur dont la vanne de chargement est munie d'un joint gonflable, et on peut gonfler ce joint après le chargement mais avant le transport du conteneur.

On peut utiliser un conteneur dont la vanne de chargement est munie d'un joint gonflable et dont la vanne de déchargement est munie d'un joint gonflable, et ces deux joints sont de préférence gonflés pendant le transport.

On peut utiliser un conteneur dont la vanne de déchargement est munie d'un joint gonflable, et on peut dégonfler ce joint après le transport du conteneur mais avant le déchargement.

On peut aussi utiliser un conteneur dont la vanne de chargement et/ou de déchargement sont munies de moyens de clampage tels que décrits précédemment, et éventuellement en outre de moyens tels que décrit précédemment pour faire le vide dans l'espace entre sa plaque pivotante et le couvercle (ou carter) et/ou de moyens tels que décrit précédemment pour contrôler la pression dans l'espace entre le carter et la plaque pivotante, espace pour lequel le vide a été de préférence fait préalablement à l'étape de transport via un raccord rapide.

Avant le transport, on fixe de préférence un couvercle (ou carter) sur la vanne de chargement et/ou sur la vanne de déchargement, de sorte que ce couvercle reste fixé pendant tout le transport.

Avant le transport, on fait de préférence le vide (on pompe pour diminuer la pression) dans l'espace situé entre le couvercle de respectivement de la vanne de chargement et/ou de la vanne de déchargement et la plaque pivotante respectivement de la vanne de chargement et/ou de la vanne de déchargement.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 est une vue de profil d'un mode de réalisation préféré de conteneur,
- la figure 2 est une vue de coupe de profil du conteneur de la figure 1,
- la figure 3 illustre une vanne « active », selon l'état de la technique antérieure, d'un dispositif à double vannes,
- la figure 4 illustre une vanne « passive », d'un dispositif à double vannes,
- la figure 5 est une vue de profil, selon la direction de vision I de la figure 4, de la plaque pivotante 26 de la vanne illustrée sur la figure 4,
- la figure 6 est une vue de coupe de profil, selon le plan II de la figure 4, de la vanne active de la figure 3 et de la vanne passive de la figure 4 juste avant leur couplage,
- la figure 7 est une vue de coupe de profil, selon le plan II de la figure 4, de la vanne active de la figure 3 et de la vanne passive de la figure 4 couplées,
- les figures 8 et 9 sont des vues de coupe de profil, selon le plan III de la figure 4, de la vanne passive de la figure 4 munie d'une première variante de joint,
- la figure 10 est une vue de coupe de profil, selon le plan III de la figure 4, de la vanne passive de la figure 4 munie d'une deuxième variante (préférée) de joint,
- les figures 11A et 11B illustrent respectivement un état gonflé et dégonflé du joint sur une partie IV de la figure 10,
- les figures 12 à 22 illustrent différentes étapes d'un procédé selon l'invention d'utilisation d'un conteneur,
- la figure 23 est un agrandissement de la partie supérieure gauche de la figure 1, et
- la figure 24 est une vue de coupe de profil, selon le plan III de la figure 4, de la vanne passive de la figure 4 munie d'une première variante de joint et d'un carter pour le transport du conteneur.

Ces modes de réalisation et variantes illustrés n'étant nullement limitatifs, on pourra notamment imaginer des variantes de l'invention ne comprenant qu'une sélection de caractéristiques (moyens ou étapes) décrites par la suite isolées des autres caractéristiques décrites, si cette sélection de caractéristiques est suffisante pour conférer un avantage technique ou pour différencier l'invention par rapport à de l'état de la technique antérieure. Cette sélection comprend de préférence au moins une caractéristique de préférence fonctionnelle (de préférence sans détails structurels), et/ou seulement une partie des détails structurels si cette partie uniquement est suffisante pour conférer un avantage technique ou à différencier l'invention par rapport à l'état de la technique antérieure.

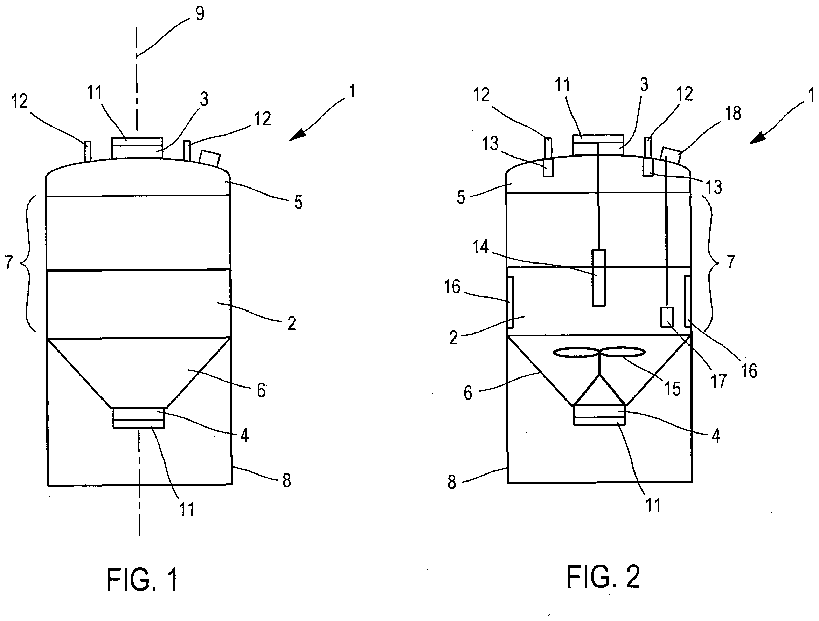

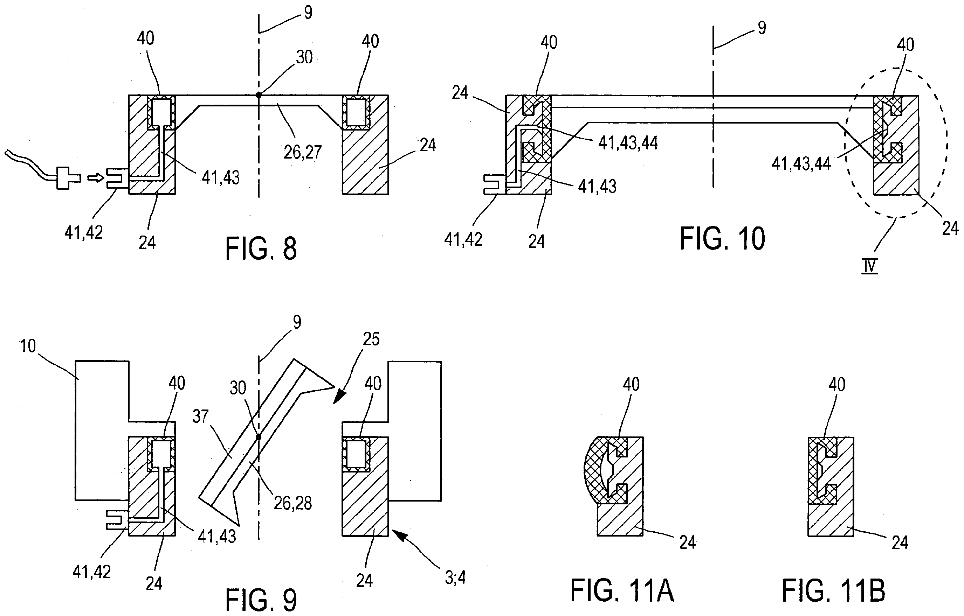

On va tout d'abord décrire, en référence aux figures 1 à 11A&B, un mode de réalisation préféré de conteneur et de vanne « passive » NanoAirLock^{®}.

Le conteneur 1 est de préférence un conteneur de particules submicroniques.

De manière plus préférentielle, les particules submicroniques consistent de préférence en une nanopoudre, de préférence une nanopoudre de carbure de silicium (SiC).

Par particules submicroniques on entend des particules dont la plus grande des dimensions (c'est-à-dire pour chaque particule la plus grande distance reliant deux points de cette particule) est inférieure à un micromètre.

Par nanopoudre, on entend une poudre constituée de particules dont la plus grande des dimensions est de quelques nanomètres ou quelques dizaines de nanomètres au plus, typiquement inférieure à 100 nanomètres.

Le conteneur 1 comprend :
- un espace interne 2 de stockage des particules submicroniques, et a une contenance typique de 500 litres,
- une vanne 3 de chargement des particules submicroniques ayant un état ouvert reliant l'espace interne 2 à l'extérieur du conteneur et laissant passer à travers elle les particules submicroniques entre l'espace interne 2 et l'extérieur du conteneur, et un état fermé empêchant les particules submicroniques de rentrer ou sortir de l'espace interne 2 à travers elle, ladite vanne de chargement 3 étant équipée de moyens de verrouillage agencés pour verrouiller la vanne de chargement 3 dans son état fermé et empêcher son ouverture lorsque cette vanne de chargement 3 n'est pas connectée à un conduit de chargement 45, et pour déverrouiller l'ouverture de la vanne de chargement 3 lorsque cette vanne de chargement 3 est connectée au conduit de chargement,
- une vanne 4 de déchargement des particules submicroniques ayant un état ouvert laissant passer à travers elle les particules submicroniques entre l'espace interne 2 et l'extérieur du conteneur et reliant l'espace interne 2 à l'extérieur du conteneur et un état fermé empêchant les particules submicroniques de rentrer ou sortir de l'espace interne 2 à travers elle, ladite vanne de déchargement 4 étant équipée de moyens de verrouillage agencés pour verrouiller la vanne de déchargement 4 dans son état fermé et empêcher son ouverture lorsque cette vanne de déchargement 4 n'est pas connectée à un conduit de déchargement 46, et pour déverrouiller l'ouverture de la vanne de déchargement 4 lorsque cette vanne de déchargement 4 est connectée au conduit de déchargement,.

L'espace interne 2 est délimité par :
- une partie supérieure 5 de paroi, de préférence de forme concave du côté de l'espace interne 2 et de préférence en inox,
- une partie inférieure 6 de paroi, de préférence en inox et de préférence de forme conique pour permettre une vidange aisée gravitaire du contenu du conteneur par la vanne de déchargement 4; sa surface interne est de préférence traitée par poli électrolytique, et
- entre la partie supérieure 5 et la partie inférieure 6, une partie principale 7 de paroi aussi appelé corps principal, qui est de préférence en inox ; sa paroi interne est de préférence avec une finition par poli électrolytique sur sa surface interne de sorte à limiter le dépôt de particules sur sa paroi.

Les parties supérieure 5 et inférieure 6 sont soudées à la partie principale 7.

Ces parties 5, 6, 7 sont fixées sur un châssis 8 gerbable.

Le conteneur 1 est un conteneur mobile. Il n'est pas indissociable d'un système industriel tel un système de production de particules submicroniques ou d'utilisation de particules submicroniques. Les vannes 3 et 4 sont « libres », c'est-à-dire qu'elles ne sont pas nécessairement fixées à autre chose. Le conteneur 1 peut être déplacé seul, sans que ces vannes 3 et 4 ne soient fixées à quelque chose d'externe au conteneur tel qu'un conduit de chargement ou de déchargement.

Chacune des vannes de chargement 3 et de déchargement 4 est une vanne passive de type « buck^{®} » (par exemple telle que commercialisée par la société GEA Process Engineering Division) mais modifiée avec un joint gonflable comme expliqué par la suite.

La vanne de chargement 3 est placée sur la partie supérieure 5.

La vanne de déchargement 4 est placée sur la partie inférieure 6 diamétralement opposée à la partie supérieure 5.

Ainsi, la vanne de déchargement 4 et la vanne de chargement 3 sont distinctes. Cela permet de diminuer le nombre d'étapes de manipulation du conteneur, car cela évite de devoir retourner le conteneur lourd entre son chargement et son déchargement. Cela permet en outre d'optimiser de manière différente (respectivement pour un chargement et pour un déchargement) les deux vannes 3 et 4 et la forme (respectivement concave ou conique) des parties respectivement 5 et 6 portant ces vannes.

La vanne de déchargement 4 et la vanne de chargement 3 sont situées sur deux côtés opposés respectivement 6 et 5 du conteneur 1 par rapport à l'espace interne 2.

Les vannes de chargement 3 et de déchargement 4 sont positionnées et alignées sur l'axe vertical 9 du conteneur respectivement sur sa partie supérieure 5 pour assurer le chargement et sa partie inférieure 6 pour assurer le déchargement. Ces vannes « passives » 3, 4 ont de préférence un même diamètre, par exemple 250 mm, et sont par défaut fermées assurant ainsi la parfaite étanchéité du conteneur 1 et ne peuvent être ouvertes qu'une fois connectées à une vanne « active » 10 d'un conduit de chargement 45 présent sur la ligne de production du fournisseur de poudre pour le chargement du conteneur et à une vanne « active » 10 d'un conduit de déchargement 46 présent chez le client pour le déchargement du conteneur.

Le conteneur 1 comprend des moyens pour fixer par clampage un couvercle 11 sur la vanne de chargement et/ou sur la vanne de déchargement.

Les moyens de clampage comprennent des trous 51 munis de pas de vis et ménagés dans le pourtour 24.

Bien entendu, on doit retirer le couvercle 11 de la vanne 3 ou 4 pour pouvoir s'en servir. Plus précisément, chaque vanne 3, 4 est protégée par un carter 11 qui permet de préserver leur état de fonctionnement et de garantir l'étanchéité en toutes circonstances (par exemple en cas de choc pendant le transport du conteneur 1). Les vannes respectivement de chargement ou de déchargement du conteneur 1 sont munies chacune de moyens pour clamper de façon étanche grâce à un joint chaque carter sur les plaques pivotantes des vannes respectivement de chargement ou de déchargement.

Le conteneur 1 comprend des moyens 12 de connexion avec une source de fluide agencés pour injecter ce fluide (de préférence un liquide) dans l'espace interne 2. Ces moyens 12 sont situés du même côté que la vanne de chargement 3. Les moyens 12 sont donc situés plus près de la vanne de chargement 3 que de la vanne de déchargement 4. Les moyens 12 sont agencés pour que le fluide injecté par les moyens 12 s'écoule dans le conteneur selon une même direction moyenne que la direction d'écoulement des particules à travers la vanne de chargement 3. Les moyens 12 comprennent au moins un raccord 12 mâle ou femelle agencé pour être ouvert pour permettre un passage de fluide à travers lui entre l'espace interne et l'extérieur du conteneur lorsqu'il est connecté à un raccord complémentaire respectivement femelle ou mâle d'une source ou évacuation de fluide et pour être fermé pour empêcher un passage de fluide à travers lui entre l'espace interne et l'extérieur du conteneur lorsqu'il n'est pas connecté au raccord complémentaire de la source ou évacuation de fluide. Chaque raccord 12 est distinct des vannes de chargement 3 et de déchargement 4.

Chaque raccord 12 mâle ou femelle est placé sur la partie supérieure 5. Chaque raccord 12 déconnecté à un raccord complémentaire est en position fermée et chaque raccord 12 connecté à un raccord complémentaire est en position ouverte. Chaque raccord est un raccord « rapide » à haute tenue au vide et faible taux de fuite, et possède de préférence un diamètre compris entre 4 et 20 mm. Chaque raccord 12 peut laisser passer des gaz ou des liquides. Un fournisseur possible pour chaque raccord est la société Staübli, en particulier parmi sa gamme de raccord « rapide ». Chaque raccord 12 permet d'introduire du gaz ou des liquides dans le conteneur. Chaque raccord 12 permet aussi de pomper du fluide à partir de l'espace interne 2.

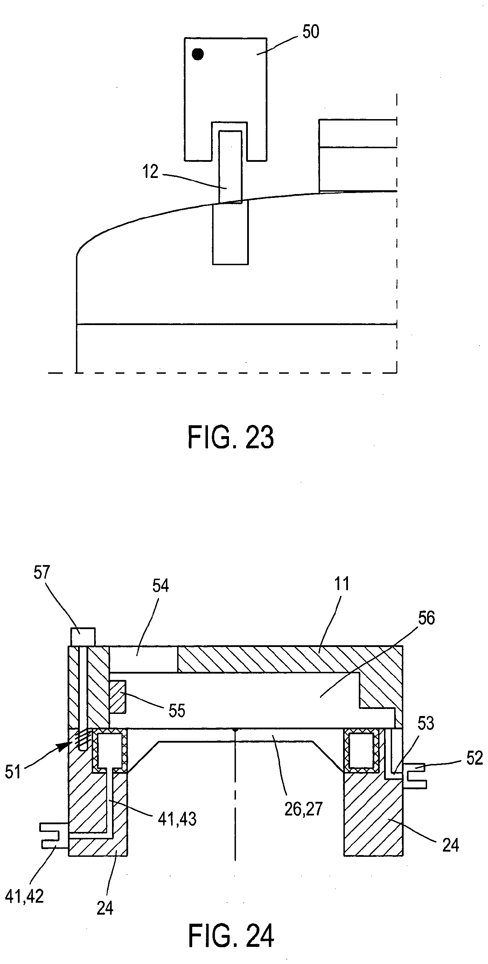

Comme illustré sur la figure 23, chaque raccord 12 mâle ou femelle peut être connecté (de préférence pendant le transport du conteneur 1) avec une soupape 50 munie d'un connecteur complémentaire respectivement femelle ou mâle de manière à former un système agencé pour s'ouvrir pour une différence de pression entre l'espace interne et l'extérieur du conteneur supérieure à un seuil (typiquement compris entre 100 et 500 mbars, de préférence sensiblement égal à 300mbars)..

Chaque raccord 12 est distinct des vannes de chargement 3 et de déchargement 4.

Les moyens 12 de connexion avec une source de fluide sont situés plus proche de la vanne de chargement 3 que de la vanne de déchargement 4. Dans le cas de liquide, au moins un raccord 12 est équipé d'une buse 13 placée dans l'espace interne 2 permettant d'assurer la pulvérisation de liquide sur des particules contenues dans l'espace interne 2, par exemple pour les mettre en suspension. Ainsi, on peut correctement pulvériser le fluide, ce qui ne serait pas le cas si la buse était située du côté de la vanne de déchargement et que les particules étaient tassées contre la buse.

Les vannes 3 et 4 et chaque raccord 12 sont placées de sorte d'être conformes à la norme ADR pour le transport de matières dangereuses.

Le conteneur 1 comprend de manière générale des moyens pour changer in situ dans l'espace interne l'état physique des particules submicroniques contenues dans l'espace interne 2.

Les moyens pour changer in situ dans le conteneur l'état des particules submicroniques comprennent :
- des moyens 14 pour émettre des ultrasons à l'intérieur de l'espace interne ; ces moyens d'émission peuvent par exemple comprendre un ou plusieurs barreaux transducteurs / émetteurs d'ultrasons immergeables de même ou différentes fréquences et de puissance adaptée à l'espace interne 2, à la nature des particules contenues dans le volume 2, à la concentration de la suspension de particules à traiter. Des émetteurs de type « pushpull » peuvent convenir (fournisseur possible : Martin Walter). Dans une variante ces barreaux sont parties intégrantes du conteneur, dans une autre variante ces barreaux ne sont introduits dans le conteneur qu'après que du liquide ait été injecté par un raccord 12. Ces moyens d'émission d'ultrasons sont de préférence introduits par la bride du haut sur laquelle est placée la vanne « passive » de chargement 3. Les barreaux sont répartis de sorte d'assurer le traitement le plus uniforme possible de la suspension, ce traitement ayant pour but d'assurer une dispersion optimum des particules les unes vis à vis des autres ; et/ou.
- des moyens pour brasser mécaniquement les particules submicroniques dans l'espace interne 2; les moyens de brassage sont situés plus proche de la vanne de déchargement 4 que de la vanne de chargement 3, et sont typiquement situés dans l'espace interne 2 au niveau de l'embouchure de la vanne de déchargement 4 ; ces moyens de brassage comprennent typiquement une hélice 15 permettant d'assurer un brassage mécanique de la suspension de particules contenue dans l'espace interne 2 ; ces moyens de brassage 15, couplés avec les moyens 14 d'émission d'ultrasons, permettent d'homogénéiser le traitement de la suspension et/ou de brasser les particules pour en faciliter le déchargement par la vanne 4; et/ou
- des moyens 16 pour chauffer ou sécher les particules submicroniques à l'intérieur de l'espace interne 2; ces moyens 16 comprennent typiquement des résistances chauffantes permettant de sécher in situ la suspension contenue dans l'espace interne 2 dans le but de former une matière sèche très compactée avec le cas échéant des additifs précipités à la surface des grains par voie chimique lors de l'étape de mise en suspension.

Le fait que la vanne de déchargement 4 et la vanne de chargement 3 soient distinctes permet d'équiper la vanne de déchargement 4 avec l'hélice 15 pour faciliter le déchargement des particules, sans pour autant obstruer la vanne 3 pour le chargement des particules.

Le conteneur 1 comprend en outre des moyens 17 pour mesurer au moins un paramètre physique (pH et/ou potentiel Zeta, et /ou température et/ou pression etc...) des particules submicroniques à l'intérieur de l'espace interne. Ces moyens de mesure comprennent typiquement une sonde permettant de mesurer :
- de préférence le pH et/ou le potentiel Zeta de la suspension aqueuse formée dans le l'espace 2 après pulvérisation de liquide ; et/ou
- la température du contenu de l'espace 2 ; et/ou
- la pression à l'intérieur de l'espace 2.

De préférence la sonde 17 est introduite via une bride 18 située sur la partie supérieure 5 du conteneur, de manière permanente (ou dans une variante uniquement une fois que le liquide a été injecté dans le conteneur).

Le fait de pouvoir changer l'état des particules ou de pouvoir mesurer un paramètre alors que le conteneur est fermé permet d'isoler les particules de l'extérieur du conteneur et évite une étape de transfert des particules en dehors du conteneur pour changer leur état ou en mesurer un paramètre ; cela permet donc à la fois d'améliorer l'étanchéité et la sécurité du procédé mis en oeuvre avec le conteneur et permet en outre de diminuer le nombre d'étapes de manipulation des particules.

Le conteneur 1 est agencé pour se charger et pour se décharger par un dispositif à doubles vannes comprenant pour le chargement la vanne 3 (et la vanne 10) et pour le déchargement la vanne 4 (et la vanne10).

On va maintenant décrire plus en détail chaque vanne 3 et 4 du conteneur 1. Ces vannes 3, 4 étant identiques pour ce qui est de leur principe général, la description qui en sera faite par la suite se fera sans distinction (l'expression « la vanne 3 ;4 » signifiant « respectivement la vanne 3 ou la vanne 4 »).

La vanne 3 ;4 « passive » est agencée pour se coupler à un conduit de chargement ou de déchargement comprenant une vanne de conduit 10 « active » munie d'une plaque pivotante 37 de manière à former un dispositif à double vannes papillon, les moyens de verrouillage étant agencés pour déverrouiller l'ouverture de la vanne 3 ;4 lorsque la plaque pivotante 37 de la vanne de conduit 10 est couplée à la plaque pivotante 26 de la vanne 3 ;4.

Comme expliqué précédemment, le dispositif à double vannes comprend une vanne « active » 10 ne faisant pas partie du conteneur 1 et une vanne « passive » 3 ; 4 faisant partie du conteneur 1.

La vanne 10 est dite « active » car elle comprend des moyens 19 (typiquement une manivelle) pour actionner l'ouverture des vannes 10 et 3 ;4 une fois que ces vannes sont couplées. Cette vanne 10 est de préférence différente pour le chargement et pour le déchargement.

La vanne 3 ; 4 est dite « passive » car elle ne comprend pas de tels moyens d'actionnement d'ouverture.

Les vannes 10 et 3 ;4 se ferment indépendamment l'une de l'autre et de façon étanche.

Cependant, ces vannes 10 et 3 ;4 ne peuvent être ouvertes que lorsqu'elles sont couplées l'une à l'autre : l'ouverture du dispositif à double vannes (c'est-à-dire les ouvertures combinées et simultanées des vannes 10 et 3 ;4), ne peut avoir lieu que lorsque les deux vannes 10 et 3 ;4 sont couplées l'une à l'autre, c'est-à-dire lorsque les vannes 10 et 3 ;4 sont combinées de manière à déverrouiller les moyens de verrouillage de la vanne 3 ;4. En l'absence de couplage, la commande d'ouverture est bloquée.

De cette manière, les faces internes 20, 21 des vannes 3 ;4 et 10 et qui sont en contact avec les particules ne sont jamais en contact avec l'atmosphère extérieure respirée par l'utilisateur.

A l'inverse, les faces externes 22, 23 des vannes 3 ;4 et 10 sont en contact avec l'atmosphère extérieure respirée par l'utilisateur lorsque les vannes 3 ;4 et 10 sont découplées mais sont accolées ensembles lorsque les vannes 3 ;4 et 10 sont couplées ce qui empêche les particules de souiller ces faces externes.

Nous allons maintenant décrire plus en détails la structure et le verrouillage/déverrouillage de la vanne 3 ;4.

La vanne 3 ;4 comprend un pourtour 24 typiquement en inox.

Le pourtour délimite un trou d'ouverture 25 de la vanne 3 ;4, trou par lequel les particules peuvent passer quand la vanne 3 ;4 est ouverte.

La vanne 3 ;4 comprend une plaque pivotante 26.

Cette plaque pivotante 26, lorsque la vanne 3 ;4 est fermée, est dans un état horizontal 27 et obture le trou d'ouverture de la vanne 3 ;4.

Cette plaque pivotante 26, lorsque la vanne 3 ;4 est ouverte, est dans un état pivoté 28 par rapport à son état horizontal de manière à ne plus obturer le trou d'ouverture 25 de la vanne 3 ;4 et permettre le passage des particules submicroniques par ce trou.

Le pourtour 24 supporte la plaque pivotante 26. Plus précisément, le pourtour 24 supporte deux demi arbres de rotation 29 (sensiblement en forme de demi cylindre) solidaires de la plaque pivotante 26. Les demi-arbres sont diamétralement opposés par rapport à la plaque pivotante 26 et sont agencés pour pouvoir pivoter à l'intérieur du pourtour 24 autour d'un axe de rotation commun 30. Pour chaque demi arbre 29, la rotation autour de l'axe 30 s'effectue par rotation d'une rainure 31 en arc de cercle (creusée dans le demi arbre) sur un rail 32 en arc de cercle solidaire du pourtour 24.

Chaque demi arbre 29 est en outre muni d'un trou 33.

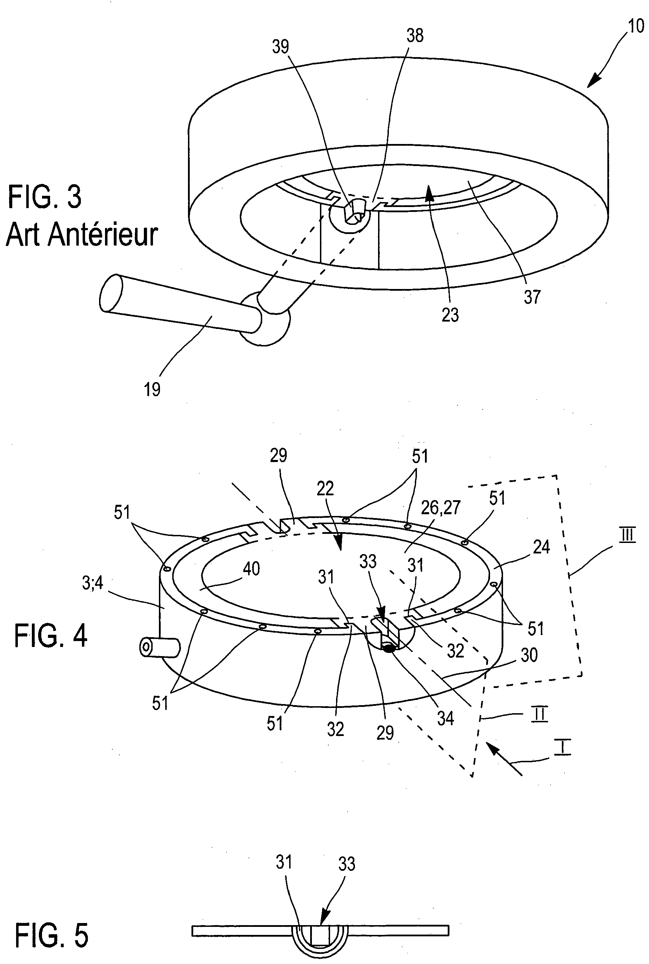

Au niveau de chaque demi arbre 29, le pourtour 24 est muni d'un logement 34 comprenant un ressort 35 poussant hors du logement un ergot 36 (non représenté sur la figure 4 pour pouvoir distinguer le logement 34) solidaire du ressort 35.

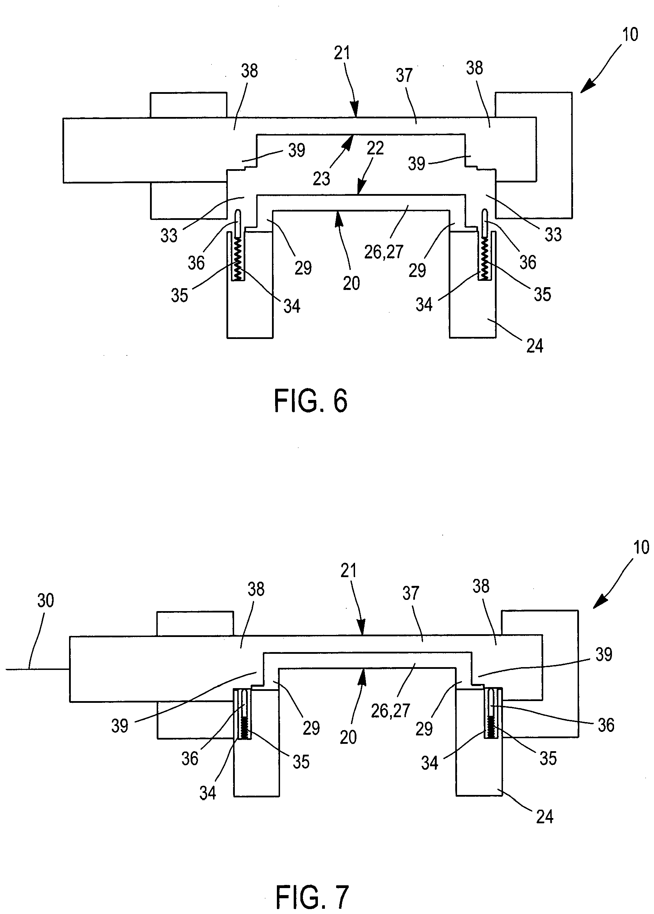

Pour chaque couple de trou 33 et de logement 34 associés, lorsque la vanne 3 ;4 est fermée et n'est pas couplée à la vanne active 10 (comme illustré sur la figure 6), l'ergot 36 sort de son logement 34 et passe à travers le trou 33 du demi arbre 29 de manière à immobiliser le demi arbre 29 et empêcher sa rotation.

Ainsi, les moyens de verrouillage comprennent au moins un ergot 36 bloquant la rotation de la plaque pivotante 26 lorsque la vanne 3 ;4 est fermée et n'est pas couplée à la vanne active 10.

La vanne active 10 est structurée de manière similaire avec une plaque pivotante 37 solidaires de demi arbres 38 diamétralement opposés. Chaque demi arbre 38 porte une protubérance 39 de forme complémentaire à chaque trou 33.

Comme illustré sur la figure 7, lorsque les vannes 10 et 3 ;4 sont couplées, les faces externes 22, 23 des vannes 3 ;4 et 10 sont accolées ensembles.

Comme illustré sur la figure 7, le tout est agencé pour que, lorsque les vannes 3 ;4 et 10 sont couplées, chaque protubérance 39 pénètre dans un trou 33 de manière à repousser un ergot 36 dans son logement 34 et ainsi libérer la rotation des demi arbres 29 (et 38) et donc des plaques pivotantes 26 (et 37).

Ainsi, le couplage des deux vannes 10 et 3 ;4 permet de libérer le verrouillage, et les plaques 26, 37 (aussi appelées volets ou papillons) peuvent pivoter sous l'action de la manivelle 19.

La vanne 3 ;4 comprend en outre un joint gonflable 40 de préférence en caoutchouc

Le joint est porté par le pourtour 24.

Le joint 40 est agencé pour être en contact avec au moins une partie du périmètre de la plaque pivotante 26 lorsque la plaque 26 est dans son état horizontal de manière à assurer l'étanchéité de la vanne 3 ;4 lorsque la vanne 3 ;4 est fermée.

La vanne 3 ;4 comprend en outre des moyens 41 pour gonfler et dégonfler le joint 40, typiquement pour gonfler le joint 40 contre la plaque pivotante 26 dans son état fermé.

Les moyens 41 sont agencés pour gonfler le joint 40 (Figure 11A) contre la plaque pivotante 26 lorsque la vanne 3 ;4 est fermée (figures 8 et 10). Ainsi, on améliore l'étanchéité de la vanne 3 ;4 lorsqu'elle elle fermée. On améliore la tenue mécanique de la vanne 3 ;4 en position fermée et son étanchéité, et on la rend utilisable pour des différences de pression avec l'extérieur du conteneur plus élevée et on lui permet de supporter de plus hautes températures. La vanne 3 ;4 et donc le conteneur a une meilleur étanchéité que selon l'état de la technique, en particulier pour des différentiels de pression entre l'espace interne 2 et l'extérieur du conteneur allant par exemple jusqu'à au moins 1000 mbars, voir même au moins 1500 mbars.

Les moyens 41 sont agencés pour dégonfler le joint 40 (Figure 11B) de contre la plaque pivotante 26 avant d'ouvrir la vanne 3 ;4. Ainsi, on libère la plaque pivotante 26 de la pression du joint 40 pour permettre sa rotation et l'ouverture de la vanne 3 ;4 (figure 9).

Les moyens de gonflage et de dégonflage 41 comprennent :
- un raccord 42 mâle ou femelle, et
- un conduit 43 raccordant le raccord 42 au joint 40.
Le raccord 42 mâle ou femelle est agencé :
- pour être ouvert lorsqu'il est connecté à un raccord complémentaire respectivement femelle ou mâle d'une source ou évacuation de fluide pour permettre un passage de ce fluide entre le conduit 43 et ce raccord complémentaire de manière à gonfler le joint 40 par la source de fluide ou de le dégonfler dans l'évacuation de fluide, et
- pour être fermé lorsqu'il n'est pas connecté à ce raccord complémentaire respectivement femelle ou mâle pour empêcher ce passage de ce fluide entre le conduit 43 et ce raccord complémentaire de manière à ce que l'état de gonflement du joint demeure inchangé.

Le fluide pour gonfler le joint est un gaz, de préférence de l'air ou de l'azote.

Sur les figures 8, 9 et 10, le joint est représenté à gauche et à droite de ces figures car il possède sensiblement une symétrie de révolution autour de l'axe 9.

Dans une première variante (illustrée sur les figures 8 et 9), le joint 40 est un joint creux. Le conduit 43 est raccordé à l'intérieur creux du joint de manière à permettre un gonflement de la section du joint.

Dans une deuxième variante (illustrée sur les figures 10, 11A et 11B), le conduit 43 débouche sur le joint 40 en formant une rigole 44 qui entoure le joint 40, de préférence sur tout le périmètre entre le joint 40 et le pourtour 24. De cette manière, le conduit 43 est agencé pour permettre une gonflement du joint 40 (figure 11A) en direction de l'intérieur de la vanne 3 ;4, c'est-à-dire contre la plaque pivotante 26 lorsque la vanne 3 ;4 est fermée (typiquement en direction de l'axe 9 central de la vanne 3 ;4).

Ainsi, les moyens 41 sont agencés pour faire gonfler le joint 40 en faisant gonfler un espace intermédiaire (rigole 44) compris entre le joint 40 et une partie de la vanne 3 ;4 (pourtour 24) sur laquelle est maintenu le joint 40.

De préférence, le conteneur 1 contient des particules submicroniques dans son espace interne, de manière préférentielle des nanopoudres de préférence de carbure de silicium (SiC). De manière plus préférentielle, le conteneur contient des particules submicroniques (de préférence des nanopoudres de préférence de carbure de silicium (SiC)) dans son espace interne occupant un volume d'au moins 70 % du volume de son espace interne 2.

En référence à la figure 24, la vanne 3 ;4 est munie de moyens de clampage 51 permettant de clamper de façon étanche grâce à un joint (non illustré) un carter 11 sur sa plaque pivotante dans son état fermé.

Les moyens de clampage comprennent des trous 51 munis de pas de vis et ménagés dans le pourtour 24.

Le carter 11 est fixé par serrage de plusieurs vis, chaque vis passant à travers le carter 11 et venant se visser à l'intérieur d'un des trous 51.

Bien entendu, ce carter 11 est déclampé et retiré pour pouvoir coupler la vanne 3 ;4 avec la vanne 10.

Par contre, ce carter 11 est clampé sur la vanne 3 ;4 lors du transport du conteneur.

La vanne 3 ;4 est munie de moyens 52 (raccord 52, identique au raccord 42 mais débouchant sur un conduit 53 et non 43) pour faire le vide entre sa plaque pivotante 26 et le carter 11 (lorsque celui-ci est clampé) par exemple par l'intermédiaire d'un raccord rapide 52 connecté à une pompe.

La vanne 3 ;4 comprend des moyens de contrôle 55 permettant de contrôler l'étanchéité entre le carter 11 (lorsque celui-ci est clampé) et sa plaque pivotante 26 fermée. Ces moyens de contrôle peuvent être une petite jauge de pression 55 ou une pastille 55 comprenant une poudre dont la couleur varie en fonction de la pression, pastille ou jauge visible depuis l'extérieur grâce à un petit hublot 54 et en contact avec l'espace 56 situé entre le carter et la plaque pivotante. Ainsi une fois le clamp fermé et l'espace entre le carter et la plaque pivotante pompé, la couleur de la pastille prend une teinte A. Cette teinte reste stable tant que le vide est conservé et change de couleur si le vide entre le carter et la plaque pivotante est rompu suite par exemple à un incident choc pendant la phase de transport. De préférence la poudre produit un effet réversible en fonction de la pression : lorsque la couleur devient B suite à une entrée d'air, elle redevient A lorsque la pression diminue de nouveau par exemple après un nouveau pompage de l'espace. L'indicateur peut aussi être constitué d'une membrane visible depuis l'extérieur du conteneur et qui se rompt si une entrée d'air survient dans l'espace en question.

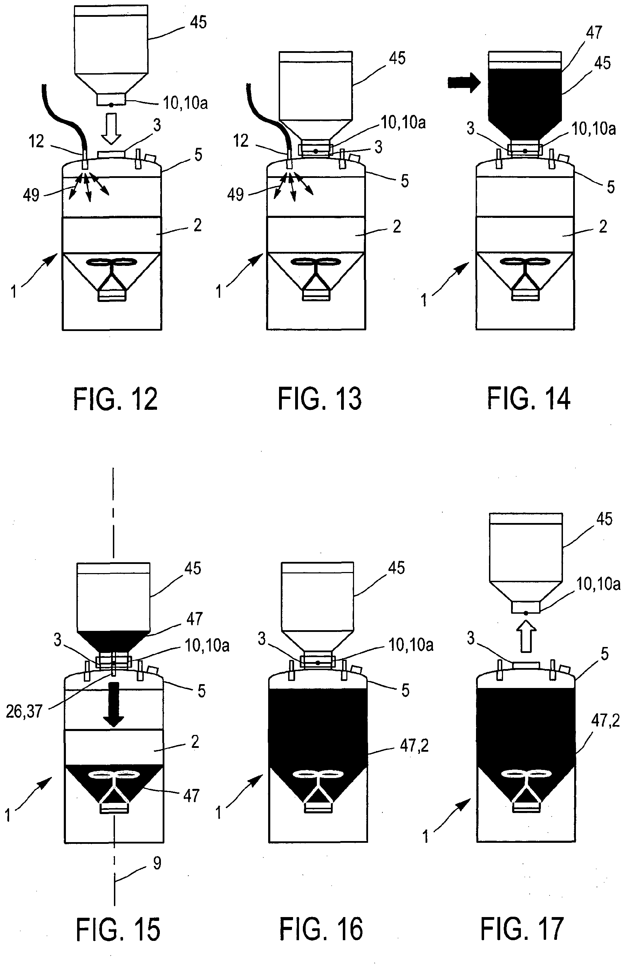

On va maintenant décrire, en référence aux figures 12 à 22, un mode de réalisation de procédé selon l'invention d'utilisation d'un conteneur 1.

Dans ce procédé, en référence aux figures 12 à 17, on charge le conteneur 1 avec des particules nanométriques et par sa vanne de chargement 3. On charge le conteneur de préférence avec des particules sèches, c'est-à-dire pas en solution.

Le chargement s'effectue typiquement sur un site de chargement.

Le chargement se déroule typiquement de la manière suivante.

Comme illustré sur la figure 12, on vient positionner une trémie 45 (c'est-à-dire le conduit de chargement) fermée en son extrémité inférieure par la vanne active 10, 10a de type « buck^{®} » de manière à la connecter à la vanne de chargement passive 3 située sur la partie supérieure 5 du conteneur 1. La vanne 3 et la vanne 10, 10a sont mises en contact, leurs axes étant parfaitement alignés. Les vannes 3 et 10, 10a sont connectées hermétiquement.

Ainsi les vannes 10, 10a et 3 sont hermétiquement connectées, tout en étant fermées. Les plaques pivotantes 26 et 37 sont fermées, c'est-à-dire chacune dans leur position horizontale. Il s'agit de la configuration illustrée sur la figure 13.

On vient connecter les parties complémentaires respectivement males ou femelles aux raccords rapides 12 respectivement femelles ou males permettant de pomper l'intérieur du conteneur (et de l'espace 2) puis d'injecter un gaz 49 dans le conteneur (dans l'espace 2), cela avant (comme illustré sur la figure 12) ou après (comme illustré sur la figure 13) avoir connecté les vannes 10, 10a et 3. Ce gaz 49 est un gaz neutre.

Il est important que les vannes 3 et 4 résistent à de fortes différences de pression entre l'espace interne 2 et l'extérieur du conteneur, notamment au cours de ces étapes de pompage et d'injection de gaz 49 pour lesquelles on atteint typiquement des différences de pression jusqu'à 900mbars.

On pompe le conteneur via le raccord 12, puis on le rince avec le gaz neutre 49 comme de l'azote avant son remplissage par des nanopoudres. Il s'agit d'évacuer l'air au maximum.

Ensuite, comme illustré sur la figure 14, les particules submicroniques 47 (illustrées en noir) après production sont injectées dans la trémie 45 par différents moyens possibles pour l'homme du métier.

On dégonfle le joint 40 de la vanne 3 par l'intermédiaire de son raccord 42.

Ensuite, comme illustré sur la figure 15, on fait pivoter ensemble les plaques pivotantes 26 et 37 des vannes respectivement 3 et 10, 10a. Lors de leur pivotement, ces plaques 26 et 37 sont en contact l'une avec l'autre et pivotent autour d'un axe perpendiculaire à l'axe 9 du conteneur. Lors de leur pivotement, les plaques 26 et 37 effectuent un mouvement de rotation d'un angle de 90 ° provoquant l'ouverture de la partie inférieure de la trémie 45 et de la partie supérieure 5 du conteneur 1. S'en suit un remplissage gravitaire du conteneur, le contenu de la trémie se déversant en son sein.

Ensuite, comme illustré sur la figure 16, les plaques 26 et 37 pivotent dans le sens opposé de 90° de sorte d'isoler la trémie 45 du conteneur. La partie inférieure de la trémie 45 est donc de nouveau fermée et la partie supérieure 5 du conteneur également.

Ensuite, on gonfle le joint 40 de la vanne 3 par l'intermédiaire de son raccord 42 comme décrit précédemment.

Ensuite les deux vannes 3 et 10, 10a sont désaccouplées comme illustré sur la figure 17, la vanne active 10, 10a restant solidaire de la trémie 45.

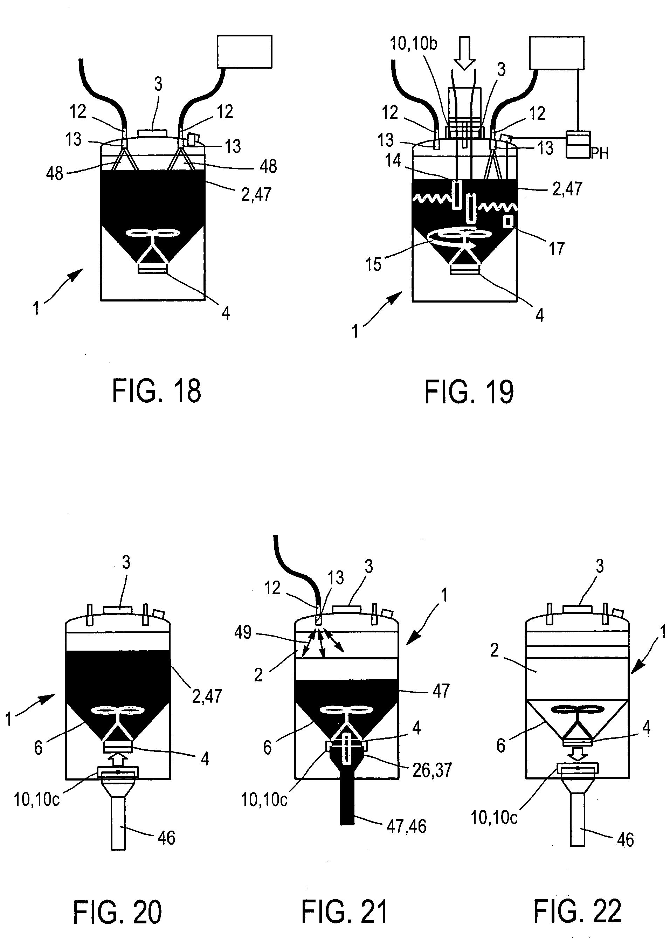

Après le chargement du conteneur, en référence aux figures 18 à 19, on change de manière optionnelle l'état physique des particules 47 contenues dans l'espace interne 2 du conteneur 1, de préférence alors que les vannes 3 et 4 sont fermées. Le fait de pouvoir changer l'état des particules alors que le conteneur est fermé permet d'isoler les particules de l'extérieur du procédé ou évite une étape de transfert des particules en dehors du conteneur pour changer leur état ; cela permet donc à la fois d'améliorer l'étanchéité et la sécurité du procédé mis en oeuvre avec le conteneur et permet en outre de diminuer le nombre d'étapes de manipulation des particules.

Typiquement, on change l'état physique des particules d'un état solide ou sec à un état liquide ou en solution.

Comme illustré sur la figure 18, on vient connecter les parties complémentaires respectivement males ou femelles aux raccords rapides 12 respectivement femelles ou males permettant d'injecter un liquide 48, par exemple de l'eau, dans le conteneur 1. Le liquide est pulvérisé dans le conteneur par la buse 13 de sorte de mouiller les particules 47 puis de les passer dans un état en solution.

Il est possible d'ajouter des additifs dans le liquide 48 de sorte de favoriser la dispersion des particules 47 les unes vis à vis des autres dans le liquide, les additifs utilisés dépendant du liquide utilisé et de la nature des particules et en particulier de leur chimie de surface. On peut notamment utiliser des dispersants permettant d'assurer une dispersion par effet stérique ou électrostatique, voire par les deux effets des particules. Il est également possible par ce biais de greffer de nouvelles molécules et ou de faire précipiter chimiquement à la surface des particules de nouvelles phases utiles pour l'application visée.

Ensuite, comme illustré sur la figure 19, on vient connecter, à la vanne 3, une vanne active 10, 10b (de préférence une autre vanne active 10 que la vanne 10, 10a précédemment illustrée pour le déchargement de particules) cette vanne active 10, 10b étant connectée à un dispositif de barreaux ultrasons amovibles 14. Une fois les deux vannes 3 et 10, 10b connectées (c'est-à-dire couplées), on procède de nouveau à l'ouverture par pivotement après avoir dégonflé le joint 40 de la vanne 3 par l'intermédiaire de son raccord 42, et on introduit les barreaux ultrasons 14 dans le liquide 48 contenant les particules 47.

Ensuite, toujours comme illustré sur la figure 19, on alimente électriquement les barreaux 14 et on connecte l'hélice 15 à un moteur externe qui va l'entraîner. On fait alors agir le brassage mécanique de façon alternée avec les ultrasons de sorte de disperser de façon optimum les particules 47 les unes vis à vis des autres et ce de façon homogène. Le brassage permet de faire circuler le liquide près des barreaux et d'assurer un traitement optimum in situ dans le conteneur 1.

On remarque que dans la ou les variantes :
- où les barreaux 14 ne sont pas introduits dans l'espace 2 par une vanne 10b mais font partie intégrante du conteneur, on peut émettre des ultrasons alors que la vanne 3 est fermée, et/ou
- où l'hélice 15 est équipée d'un moteur faisant partie du conteneur 1, on peut alimenter électriquement ce moteur par un simple branchement électrique du conteneur 1 avec une source externe d'électricité.

On peut contrôler l'acidité de la suspension liquide, en particulier en cas de suspension aqueuse par la sonde pH 17 immergée qui va permettre notamment d'ajuster l'injection de dispersants.

On peut également connecter un dispositif 17 de mesure de viscosité permettant de prélever la suspension pour analyser sa viscosité en continu.

Ensuite, on ferme les vannes 3 et 10b.

Ensuite, on gonfle le joint 40 de la vanne 3 par l'intermédiaire de son raccord 42.

Ensuite les deux vannes 3 et 10, 10b sont désaccouplées.

Ensuite, on clampe le carter 11 sur la vanne 3 avant le transport du conteneur. En effet, pendant toutes les étapes précédentes, le carter 11 n'était pas clampé sur la vanne 3.

Pendant toutes les étapes précédentes, l'autre carter 11 est resté clampé sur la vanne 4.

Ensuite, on transporte le conteneur sur un site de déchargement distant du site de chargement, alors que ses vannes 3 et 4 ne sont pas connectées ou couplées à des vannes 10 complémentaires mais sont gonflées.

Pendant le transport, on connecte au moins un des raccords 12 à la soupape 50, ceci pour des raisons de sécurité, notamment en cas d'augmentation de température et donc de pression dans le conteneur 1.

Pendant le transport, la pression à l'intérieur du conteneur est de l'ordre de 1000mbar, et donc très proche de la pression atmosphérique.

Pendant toutes les étapes suivantes, le carter 11 reste clampé sur la vanne 3.

Par contre, on enlève (on déclampe) l'autre carter 11 de sur la vanne 4.

Enfin, en référence aux figures 20 à 22, on décharge les particules submicroniques du conteneur 1 par sa vanne de déchargement 4.

Le déchargement s'effectue typiquement sur le site de déchargement.

On décharge le conteneur de préférence avec des particules en solution.

Comme illustré sur la figure 20, on vient positionner sur la vanne de déchargement 4 située sur la partie inférieure 6 du conteneur, une vanne active 10, 10c solidaire du conduit de déchargement 46 dans lequel on veut injecter la suspension de particules. Ainsi on connecte (c'est-à-dire que l'on couple) les vannes 4 et 10c.

Ensuite, comme illustré sur la figure 21, on vient connecter les parties complémentaires respectivement males ou femelles aux raccords rapides 12 respectivement femelles ou males permettant d'injecter un gaz 49 dans le conteneur. Ce gaz 49 peut être par exemple de l'air ou un gaz neutre. Cela permet d'équilibrer les pressions entre l'intérieur du conteneur et le procédé ou la canalisation 46 dans laquelle les poudres sont injectées).

Ensuite, on dégonfle le joint 40 de la vanne 4 par l'intermédiaire de son raccord 42.

Toujours comme illustré sur la figure 21 on ouvre comme précédemment le dispositif à double vannes 4, 10c par pivotement des plaques 26, 37 en contact. Les deux plaques 26, 37 sont en contact et on fait pivoter l'ensemble ce qui provoque l'ouverture du conteneur sur la canalisation 46 permettant d'injecter les particules (en suspension) dans le conduit 46. Ces particules 47 se déversent alors dans le système.

Ensuite, comme illustré sur la figure 22, on fait pivoter en sens inverse les plaques 26, 37 de sorte de refermer le conteneur et le conduit 46 de façon simultanée. Ensuite, on gonfle le joint 40 de la vanne 4 par l'intermédiaire de son raccord 42 et les deux vannes 4, 10c sont désaccouplées et le conteneur 1 est libre pour une nouvelle utilisation.

Dans des variantes du procédé selon l'invention venant d'être décrit, le changement d'état des particules peut se faire à n'importe quel moment, par exemple avant et/ou après le transport du containeur.

Dans des variantes du procédé selon l'invention venant d'être décrit, le changement d'état des particules peut comprendre un chauffage (typiquement via les moyens 16) de la solution de particules 47 (de préférence alors que les vannes 3 et 4 sont fermées). Un tel chauffage peut être réalisé de manière à évaporer le liquide 48 de sorte que les particules 47 contenues dans l'espace 2 soient sèches. Ainsi, on peut rendre plus compact les particules 47 par rapport à un état sec avant leur mise en solution. Après un tel chauffage/séchage, on peut compléter le chargement du conteneur 1 sur le même principe que décrit en référence aux figures 15 et 16.

Ainsi de manière astucieuse, on peut par exemple :
- sécher les particules dans le conteneur sur le site de chargement pour les tasser, puis compléter le chargement,
- puis éventuellement faire passer les particules dans le conteneur d'un état sec vers un état en solution seulement une fois sur le site de déchargement, de manière à faciliter l'écoulement des particules lors de leur déchargement tout en limitant le poids du conteneur sans liquide pour le transport.

Bien sûr, l'invention n'est pas limitée aux exemples qui viennent d'être décrits et de nombreux aménagements peuvent être apportés à ces exemples sans sortir du cadre de l'invention.

Par exemple, l'ordre des étapes du procédé selon l'invention peut être modifié. Par exemple, pour le chargement, on peut gonfler le joint 40 après ou avant avoir désaccouplées les vannes 3 et 10a.

On peut aussi changer l'état des particules (figures 18 et 19) après le transport du conteneur.

Bien entendu, les différentes caractéristiques, formes et variantes de réalisation de l'invention peuvent être associées les unes avec les autres selon diverses combinaisons dans la mesure où elles ne sont pas incompatibles ou exclusives les unes des autres.

## Revendications

1. Procédé d'utilisation d'un conteneur, ledit conteneur comprenant :
- un espace interne (2) de stockage des particules submicroniques,
- une vanne de chargement (3) des particules submicroniques ayant un état ouvert laissant passer à travers elle les particules submicroniques entre l'espace interne et l'extérieur du conteneur et un état fermé empêchant les particules submicroniques de rentrer ou sortir de l'espace interne à travers elle, ladite vanne de chargement étant équipée de moyens de verrouillage (33, 34, 35, 36) agencés pour verrouiller la vanne de chargement dans son état fermé et empêcher son ouverture lorsque cette vanne de chargement n'est pas connectée à un conduit de chargement (45),
- une vanne de déchargement (4) des particules submicroniques ayant un état ouvert laissant passer à travers elle les particules submicroniques entre l'espace interne et l'extérieur du conteneur et un état fermé empêchant les particules submicroniques de rentrer ou sortir de l'espace interne à travers elle, ladite vanne de déchargement étant équipée de moyens de verrouillage (33, 34, 35, 36) agencés pour verrouiller la vanne de déchargement dans son état fermé et empêcher son ouverture lorsque cette vanne de déchargement n'est pas connectée à un conduit de déchargement (46)
- un raccord (12) agencé pour être ouvert pour permettre un passage de fluide à travers lui entre l'extérieur du conteneur et l'espace interne lorsqu'il est connecté à un raccord complémentaire d'une source ou évacuation de fluide et pour être fermé pour empêcher un passage de fluide à travers lui entre l'espace interne et l'extérieur du conteneur lorsqu'il n'est pas connecté au raccord complémentaire de la source ou évacuation de fluide,
ledit procédé comprenant les étapes suivantes :
- on charge le conteneur avec des particules submicroniques (47) et par sa vanne de chargement (3), sur un site de chargement, puis
- on transporte le conteneur sur un site de déchargement distant du site de chargement, puis
- on décharge les particules submicroniques du conteneur par sa vanne de déchargement (4) et sur le site de déchargement,
ledit procédé étant **caractérisé en ce qu'**il comprend en outre une injection de liquide (48) ou de gaz (49) dans l'espace interne (2) par le raccord (12), cette injection comprenant :
- une injection de gaz (49) dans l'espace interne (2) par le raccord (12) pendant que l'on décharge le conteneur, et/ou
- une injection de liquide (48) dans l'espace interne (2) par le raccord (12) avant le déchargement, le conteneur étant préalablement chargé avec des particules sèches.

2. Procédé selon la revendication 1, **caractérisé en ce que** l'on charge le conteneur (1) avec des particules sèches, le procédé comprenant l'injection de liquide (48) dans l'espace interne (2) par le raccord (12) avant le déchargement.

3. Procédé selon la revendication 1 ou 2, **caractérisé en ce que** l'on injecte le gaz (49) dans l'espace interne (2) par le raccord (12) pendant que l'on décharge le conteneur.

4. Procédé selon la revendication 3, **caractérisé en ce que** le gaz (49) injecté est de l'air.

5. Procédé selon la revendication 3 ou 4, **caractérisé en ce que** l'injection de gaz (49) équilibre les pressions entre l'intérieur du conteneur et une canalisation (46) dans laquelle les particules sont injectées.

6. Procédé selon l'une quelconque des revendications 1 à 5, **caractérisé en ce que**, avant de charger le conteneur avec des particules, on vidange l'espace interne (2) par le raccord (12), puis on rinçe l'espace interne (2) au gaz neutre par le raccord (12).

7. Procédé selon l'une quelconque des revendications précédentes, **caractérisé en ce qu'**au moins une parmi la vanne de chargement et la vanne de déchargement comprend une plaque pivotante (26), qui :
- lorsque la vanne respectivement de chargement ou de déchargement est fermée, est dans un état horizontal et obture la vanne respectivement de chargement ou de déchargement,
- lorsque la vanne respectivement de chargement ou de déchargement est ouverte, est dans un état pivoté par rapport à son état horizontal de manière à ne plus obturer la vanne respectivement de chargement ou de déchargement,
cette vanne respectivement de chargement ou de déchargement comprenant en outre :
- un joint (40) agencé pour être en contact avec au moins une partie du périmètre de la plaque pivotante lorsque la plaque est dans son état horizontal de manière à assurer l'étanchéité de la vanne respectivement de chargement ou de déchargement lorsque cette vanne est fermée, et
- des moyens (41, 42, 43) pour gonfler le joint contre la plaque pivotante dans son état fermé.

8. Procédé selon la revendication 7, **caractérisé en ce que** pour chaque joint parmi celui de la vanne de chargement et/ou de déchargement, les moyens de gonflage de ce joint sont :
- agencés pour gonfler l'intérieur du joint, le joint étant creux, ou
- agencés pour faire gonfler le joint (40) contre la plaque pivotante en gonflant un espace intermédiaire (44) compris entre le joint (40) et une partie (24) de la vanne sur laquelle est maintenu le joint (40).

9. Procédé selon la revendication 7 ou 8, **caractérisé en ce que** la vanne de chargement (3) est munie d'un joint gonflable (40), et **en ce que** l'on gonfle ce joint après le chargement mais avant le transport du conteneur.

10. Procédé selon l'une quelconque des revendications 7 à 9, **caractérisé en ce que** la vanne de chargement (3) est munie d'un joint gonflable (40) et la vanne de déchargement (4) est munie d'un joint gonflable (40), et **en ce que** ces deux joints sont gonflés pendant le transport.

11. Procédé selon l'une quelconque des revendications 7 à 10, **caractérisé en ce que** la vanne de déchargement (4) est munie d'un joint gonflable (40), et **en ce que** l'on dégonfle ce joint (40) après le transport du conteneur mais avant le déchargement.

12. Procédé selon l'une quelconque des revendications 1 à 11, **caractérisé en ce qu'**avant le transport on fixe un couvercle (11) sur la vanne de chargement et/ou sur la vanne de déchargement, de sorte que ce couvercle reste fixé pendant tout le transport.

13. Procédé selon la revendication 12, **caractérisé en ce qu'**avant le transport on fait le vide dans l'espace situé entre le couvercle (11) respectivement de la vanne de chargement et/ou de la vanne de déchargement et la plaque pivotante respectivement (26) de la vanne de chargement et/ou de la vanne de déchargement.

14. Procédé selon l'une quelconque des revendications précédentes, **caractérisé en ce que** les vannes de chargement et de déchargement sont distinctes et **en ce que** le raccord est situé plus proche de la vanne de chargement que de la vanne de déchargement.

15. Procédé selon l'une quelconque des revendications précédentes, **caractérisé en ce que** le raccord est en outre connecté à une soupape agencée pour s'ouvrir pour une différence de pression entre l'espace interne et l'extérieur du conteneur supérieure à un seuil.

16. Procédé selon l'une quelconque des revendications précédentes, **caractérisé en ce qu'**il comprend des moyens (12, 13, 14, 15, 16) pour changer in situ dans l'espace interne l'état physique des particules submicroniques, comprenant au moins un parmi :
- des moyens (14) d'émission d'ultrasons à l'intérieur de l'espace interne,
- des moyens (15) pour brasser les particules submicroniques dans l'espace interne, les moyens de brassage étant de préférence situés plus proche de la vanne de déchargement que de la vanne de chargement,
- des moyens (16) pour chauffer ou sécher les particules submicroniques à l'intérieur de l'espace interne.

## Patentansprüche

1. Verfahren zur Verwendung eines Behälters, wobei der Behälter aufweist:
- einen Innenraum (2) zum Lagern von submikrometergroßen Partikeln,
- ein Beschickungsventil (3) zum Beschicken der submikrometergroßen Partikel, das einen offenen Zustand, der die submikrometergroßen Partikel zwischen dem Innenraum und dem Außenbereich des Behälters durch dieses Ventil durchlässt, sowie einen geschlossenen Zustand hat, in dem es die submikrometergroßen Partikel daran hindert, durch das Ventil in den Innenraum einzuströmen oder daraus auszuströmen, wobei das Beschickungsventil mit Verriegelungseinrichtungen (33, 34, 35, 36) versehen ist, die dazu ausgebildet sind, das Beschickungsventil in seinem geschlossenen Zustand zu verriegeln und dessen Öffnen zu verhindern, wenn dieses Beschickungsventil nicht mit einer Beschickungsleitung (45) verbunden ist,
- ein Austragventil (4) zum Austragen der submikrometergroßen Partikel, das einen offenen Zustand, in dem es die submikrometergroßen Partikel zwischen dem Innenraum und dem Außenbereich des Behälters durch dieses Ventil durchlässt, sowie einen geschlossenen Zustand hat, in dem es die submikrometergroßen Partikel daran hindert, durch das Ventil in den Innenraum einzuströmen oder daraus auszuströmen, wobei das Austragventil mit Verriegelungseinrichtungen (33, 34, 35, 36) versehen ist, die dazu ausgebildet sind, das Austragventil in seinem geschlossenen Zustand zu verriegeln und dessen Öffnen zu verhindern, wenn dieses Austragventil nicht mit einer Austragleitung (46) verbunden ist,
- einen Anschluss (12), der dazu ausgebildet ist, geöffnet zu werden, um einen Fluiddurchtritt durch diesen zwischen dem Außenbereich des Behälters und dem Innenraum dann zu gestatten, wenn er mit einem komplementären Anschluss einer Fluidquelle bzw. eines Fluidablaufs verbunden ist, und geschlossen zu werden, um einen Fluiddurchtritt durch diesen zwischen dem Innenraum und dem Außenbereich des Behälters zu verhindern, wenn er nicht mit dem komplementären Anschluss der Fluidquelle bzw. des Fluidablaufs verbunden ist,
wobei das Verfahren die nachfolgenden Schritte umfasst:
- Beschicken des Behälters mit submikrometergroßen Partikeln (47) über sein Beschickungsventil (3) an einem Beschickungsort, dann
- Transportieren des Behälters an einen Austragort, der von dem Beschickungsort entfernt liegt, dann
- Austragen der submikronen Partikel aus dem Behälter über sein Austragventil (4) an dem Austragort,
wobei das Verfahren **dadurch gekennzeichnet ist, dass** es ferner ein Einleiten von Flüssigkeit (48) oder Gas (49) in den Innenraum (2) über den Anschluss (12) umfasst, wobei dieses Einleiten umfasst:
- ein Einleiten von Gas (49) in den Innenraum (2) über den Anschluss (12) während dem der Behälter abgelassen wird, und/oder
- ein Einleiten von Flüssigkeit (48) in den Innenraum (2) über den Anschluss (12) vor dem Austragen, wobei der Behälter zuvor mit trockenen Partikeln beschickt wird.

2. Verfahren nach Anspruch 1, **dadurch gekennzeichnet, dass** der Behälter (1) mit trockenen Partikeln beschickt wird, wobei das Verfahren das Einleiten von Flüssigkeit (48) in den Innenraum (2) über den Anschluss (12) vor dem Austragen umfasst.

3. Verfahren nach Anspruch 1 oder 2, **dadurch gekennzeichnet, dass** das Gas (49) in den Innenraum (2) über den Anschluss (12) eingeleitet wird, während der Behälter abgelassen wird.

4. Verfahren nach Anspruch 3, **dadurch gekennzeichnet, dass** das eingeleitete Gas (49) Luft ist.

5. Verfahren nach Anspruch 3 oder 4, **dadurch gekennzeichnet, dass** mit dem Einleiten von Gas (49) die Druckwerte zwischen dem Inneren des Behälters und einer Leitung (46) ausglichen werden, in welche die Partikel eingeleitet werden.

6. Verfahren nach einem der Ansprüche 1 bis 5, **dadurch gekennzeichnet, dass** vor dem Beschicken des Behälters mit den Partikeln der Innenraum (2) über den Anschluss (12) geleert wird, wonach der Innenraum (2) über den Anschluss (12) mit neutralem Gas gespült wird.

7. Verfahren nach einem der vorangehenden Ansprüche, **dadurch gekennzeichnet, dass** das Beschickungsventil und/oder das Austragventil eine verschwenkbare Platte (26) aufweist, die:
- dann, wenn das Beschickungs- bzw. Austragventil geschlossen ist, in einem horizontalen Zustand vorliegt und das Beschickungs- bzw. Austragventil verschließt,
- dann, wenn das Beschickungs- bzw. Austragventil geöffnet ist, in einem bezüglich ihres horizontalen Zustands verschwenkten Zustand vorliegt, so dass sie nicht mehr das Beschickungs- bzw. Austragventil verschließt,
wobei dieses Beschickungs- bzw. Austragventil ferner enthält:
- eine Dichtung (40), die dazu vorgesehen ist, mit zumindest einem Teil des Umfangs der verschwenkbaren Platte dann in Kontakt zu stehen, wenn die Platte in ihrem horizontalen Zustand vorliegt, so dass die Dichtheit des Beschickungs- bzw. Austragventil dann sichergestellt ist, wenn dieses Ventil geschlossen ist, und
- Einrichtungen (41, 42, 43) zum Aufblasen der Dichtung bis an die verschwenkbare Platte in ihrem geschlossenen Zustand.

8. Verfahren nach Anspruch 7, **dadurch gekennzeichnet, dass** für jede Dichtung aus derjenigen des Beschickungsventils und/oder des Austragventils die Aufblaseinrichtungen für diese Dichtung
- dazu vorgesehen sind, das Innere der Dichtung aufzublasen, wobei die Dichtung hohl ausgeführt ist, oder
- dazu vorgesehen sind, die Dichtung (40) bis an die verschwenkbare Platte aufzublasen, indem ein Zwischenraum (44) aufgeblasen wird, der zwischen der Dichtung (40) und einem Teil (24) des Ventils enthalten ist, an dem die Dichtung (40) gehalten wird.

9. Verfahren nach einem der Ansprüche 7 oder 8, **dadurch gekennzeichnet, dass** das Beschickungsventil (3) mit einer aufblasbaren Dichtung (40) versehen ist und dass diese Dichtung nach dem Beschicken, jedoch vor dem Transport des Behälters, aufgeblasen wird.

10. Verfahren nach einem der Ansprüche 7 bis 9, **dadurch gekennzeichnet, dass** das Beschickungsventil (3) mit einer aufblasbaren Dichtung (40) versehen ist und das Austragventil (4) mit einer aufblasbaren Dichtung (40) versehen ist und dass diese beiden Dichtungen während des Transports aufgeblasen sind.

11. Verfahren nach einem der Ansprüche 7 bis 10, **dadurch gekennzeichnet, dass** das Austragventil (4) mit einer aufblasbaren Dichtung (40) versehen ist und dass diese Dichtung (40) nach dem Transport des Behälters, jedoch vor dem Austragen, abgelassen wird.

12. Verfahren nach einem der Ansprüche 1 bis 11, **dadurch gekennzeichnet, dass** vor dem Transport eine Abdeckung (11) an das Beschickungsventil und/oder an das Austragventil so befestigt wird, dass diese Abdeckung während des gesamten Transports befestigt bleibt.

13. Verfahren nach Anspruch 12, **dadurch gekennzeichnet, dass** vor dem Transport der Raum evakuiert wird, der zwischen der jeweiligen Abdeckung (11) des Beschickungsventils und/oder des Austragventils und der jeweiligen verschwenkbaren Platte (26) des Beschickungsventils und/oder des Austragventils liegt.

14. Verfahren nach einem der vorangehenden Ansprüche, **dadurch gekennzeichnet, dass** das Beschickungs- und das Austragventil voneinander entfernt liegen und dass der Anschluss näher bei dem Beschickungsventil als bei dem Austragventil liegt.

15. Verfahren nach einem der vorangehenden Ansprüche, **dadurch gekennzeichnet, dass** der Anschluss ferner mit einem Ventil verbunden ist, das dazu vorgesehen ist, sich bei einer über einem Schwellwert liegenden Druckdifferenz zwischen dem Innenraum und dem Außenbereich des Behälters zu öffnen.

16. Verfahren nach einem der vorangehenden Ansprüche, **dadurch gekennzeichnet, dass** es Einrichtungen (12, 13, 14, 15, 16) umfasst, um in dem Innenraum den physikalischen Zustand der submikrometergroßen Partikel in situ zu ändern, umfassend zumindest eine der folgenden Einrichtungen:
- Einrichtungen (14) zum Emittieren von Ultraschall im Inneren des Innenraums,
- Einrichtungen (15) zum Durchrühren der submikrometergroßen Partikel in dem Innenraum, wobei die Durchrühreinrichtungen vorzugsweise näher bei dem Austragventil als bei dem Beschickungsventil liegen,
- Einrichtungen (16) zum Erhitzen bzw. Trocknen der submikrometergroßen Partikel innerhalb des Innenraums.

## Claims

1. Process for using a container, said container comprising:
- an internal space (2) for storing submicron particles,
- a filling valve (3) for filing the submicron particles, having an open state allowing the submicron particles to pass through the filling valve between the internal space and the exterior of the container and a closed state preventing the submicron particles from entering or leaving the internal space through the filling valve, said filling valve being equipped with locking means (33, 34, 35, 36) arranged for locking the filling valve in its closed state and for preventing the opening thereof when this filling valve is not connected to a filling pipe (45),
- an emptying valve (4) for emptying the submicron particles, having an open state allowing the submicron particles to pass through the emptying valve between the internal space and the exterior of the container and a closed state preventing the submicron particles from entering or leaving the internal space through the emptying valve, said emptying valve being equipped with locking means (33, 34, 35, 36) arranged for locking the emptying valve in its closed state and for preventing the opening thereof when this emptying valve is not connected to an emptying pipe (46),
- a connector (12) arranged in order to be open to allow passage of fluid through this connector between the exterior of the container and the internal space when it is connected to a complementary connector of a source or discharge of fluid and to be closed to prevent passage of fluid through this connector between the internal space and the exterior of the container when it is not connected to the complementary connector of the source or discharge of fluid,
said process comprising the following steps:
- the container is filled with submicron particles (47) via its filling valve (3), at a filling site, then
- the container is transported to an emptying site remote from the filling site, then
- the submicron particles are emptied from the container via its emptying valve (4), at the emptying site,
said process being **characterized in that** it further comprises a step of injecting liquid (48) or gas (49) into the internal space (2) via the connector (12), this injection step comprising:
- a step of injecting a gas (49) into the internal space (2) via the connector (12) while the container is being emptied, and/or
- a step of injecting liquid (48) into the internal space (2) via the connector (12) prior to the emptying step, the container being previously filled with dry particles.

2. Process according to claim 1, **characterized in that** the container is filled (1) with dry particles, the process comprising the injection of liquid (48) into the internal space (2) via the connector (12) prior to the emptying step.

3. Process according to claim 1 or 2, **characterized in that** the gas (49) is injected into the internal space (2) via the connector (12) while the container is being emptied.

4. Process according to claim 3, **characterized in that** the injected gas (49) is air.

5. Process according to claim 3 or 4, **characterized in that** the injection of gas (49) balances the pressures between the interior of the container and a pipeline (46) into which the particles are injected.

6. Process according to any one of claims 1 to 5, **characterized in that**, before filling the container with particles, the internal space (2) is emptied via the connector (12), then the internal space (2) is flushed with neutral gas via the connector (12).

7. Process according to any one of the previous claims, **characterized in that** at least one of the filling valve and the emptying valve comprises a swivel plate (26), which:
- when the filling valve or emptying valve respectively is closed, is in a horizontal state and seals the filling valve or the emptying valve respectively,
- when the filling valve or emptying valve respectively is open, is in a swivelled state with respect to its horizontal state so that it no longer seals the filling valve or the emptying valve respectively,
said filling or emptying valve respectively further comprising:
- a seal (40) arranged to be in contact with at least one part of the perimeter of the swivel plate when the plate is in its horizontal state so as to ensure hermeticity of the filling valve or the emptying valve respectively when this valve is closed, and
- means (41, 42, 43) for inflating the seal against the swivel plate in its closed state.

8. Process according to claim 7, **characterized in that** for each seal of that of the filling valve and/or of the emptying valve, the means for inflating this seal are:
- arranged in order to inflate the interior of the seal, the seal being hollow, or
- arranged in order to inflate the seal (40) against the swivel plate by inflating an intermediate space (44) between the seal (40) and a part (24) of the valve on which the seal (40) is held.

9. Process according to claim 7 or 8, **characterized in that** the filling valve (3) is equipped with an inflatable seal (40), and **in that** this seal is inflated after filling but before transporting the container.

10. Process according to any one of claims 7 to 9, **characterized in that** the filling valve (3) is equipped with an inflatable seal (40) and the emptying valve (4) is equipped with an inflatable seal (40), and **in that** both these seals are inflated during transport.

11. Process according to any one of claims 7 to 10, **characterized in that** the emptying valve (4) is equipped with an inflatable seal (40), and **in that** this seal (40) is deflated after transporting the container but prior to emptying.

12. Process according to any one of claims 1 to 11, **characterized in that** prior to transport, a cover (11) is fixed on the filling valve and/or on the emptying valve, in such a way that this cover remains fixed throughout all the transport.

13. Process according to claim 12, **characterized in that**, prior to transport, a vacuum is created in the space located between the cover (11) of the filling valve and/or of the emptying valve respectively and the swivel plate (26) of the filling valve and/or of the emptying valve respectively.

14. Process according to any one of the previous claims, **characterized in that** the filling and emptying valves are separate and **in that** the connector is located closer to the filling valve than to the emptying valve.

15. Process according to any one of the previous claims, **characterized in that** the connector is moreover connected to a safety valve arranged to open when there is a pressure difference between the internal space and the exterior of the container above a threshold.

16. Process according to any one of the previous claims, **characterized in that** it comprises means (12, 13, 14, 15, 16) for changing the physical state of the submicron particles, in situ in the internal space, comprising at least one among:.
- means (14) for emitting ultrasound within the internal space,
- means (15) for mixing the submicron particles in the internal space, the mixing means being preferably located closer to the emptying valve than to the filling valve,
- means (16) for heating or drying the submicron particles within the internal space.
